Europäisches Patentamt

European Patent Office

Office européen des brevets

(19)

(11) Veröffentlichungsnummer: **0 271 096 B1**

# (12) EUROPÄISCHE PATENTSCHRIFT

(45) Veröffentlichungstag der Patentschrift: **03.06.92**

(51) Int. Cl.5: **G06K 1/12**

(21) Anmeldenummer: **87118310.9**

(22) Anmeldetag: **10.12.87**

(54) **Farbcodierung von Informationsträgern.**

(30) Priorität: **11.12.86 DE 3642397**

(43) Veröffentlichungstag der Anmeldung:
**15.06.88 Patentblatt 88/24**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**GB-A- 1 186 253**
**US-A- 3 810 423**

**IBM Technical Disclosure Bulletin, Vol. 14,
No. 3, page 783 (1971)**

(73) Patentinhaber: **Seidl & Partner GmbH
Boschstrasse 6
W-8039 Puchheim/Bhf(DE)**

(72) Erfinder: **Strauss, Norbert
Winterstrasse 37
W-8039 Puchheim(DE)**

(74) Vertreter: **Vossius & Partner
Siebertstrasse 4 P.O. Box 86 07 67
W-8000 München 86(DE)**

## Beschreibung

Die Erfindung betrifft ein Verfahren zum Farbcodieren von Informationsträgern, insbesondere Etiketten, die aus einem Substrat bestehen, auf dem mehrere Farbcode-Felder unterschiedlicher Farbgebung aufgebracht sind.

Zu Organisationszwecken und Kennzeichnung werden Gegenstände, wie Waren oder Akten, häufig mit Informationsträgern versehen, auf denen in geeigneter Codierung bestimmte Kennzeichnungen oder Sortierkriterien aufgebracht sind. Zu diesem Zweck werden die Kennzeichnungsflächen der Informationsträger mit unterschiedlichen Farben, Strukturen, Symbolen, Rastern und/oder Lochungen versehen. Bisher werden diese Kennzeichnungen jeweils für eine der individuell ausgebildeten Codierungen auf den Informationsträger einer Endlosbahn (meist rollenförmig oder als Leporellostapel) aufgebracht, so daß entsprechend der Anzahl unterschiedlicher Organisationskennzeichen eine entsprechende Anzahl von Endlosbahnen benötigt wird. Dadurch ergeben sich jedoch wiederum erhebliche Probleme bei der Organisation und Lagerhaltung, wenn das Sortierkriterium höchster Priorität nicht mit der Organisation der Kennzeichnung übereinstimmt, da man in diesem Fall ohne größeren technischen und damit wirtschaftlichen Aufwand die Organisationskennzeichen nicht beliebig wechseln kann. Dies bedeutet nämlich, daß man

a) entweder soviele Drucker mit dazugehörigem Anschluß an einen Computer entsprechend der Anzahl der Organisationskennzeichen benötigt, was darüberhinaus noch zu einem erhörten Nachsortieraufwand führt,

b) oder einen Drucker mit automatischem Einzug für die unterschiedlichen Bahnen verwendet,

c) oder die unterschiedlichen Bahnen manuell in einen konventionellen Drucker einführt, was wiederum relativ unwirtschaftlich ist.

Aus IBM TDB, Volume 14, Nr. 3, August 1971, S. 783, ist ein Verfahren gemäß dem Oberbegriff des Patentanspruchs 1 bekannt. Bei diesen bekannten Verfahren sind auf dem zu codierenden Substrat mehrere aneinander angrenzende und zeilenweise zueinander parallele Farbstreifen unterschiedlicher Färbung vorgesehen. Zur Codierung eines Symbols wird eine Auswahl der Farben innerhalb einer die Breite des Codesymbols definierenden Spalte überdruckt.

US-A-3 810 423 offenbart ein Verfahren zum Erzeugen von Farbcodes auf Informationsträgern, bestehend aus einem Substrat, auf dem abwechselnd zwei Farben auf Feldern aufgebracht sind. Dabei wird ein maschinell optisch lesbarer Binärcode durch Überdrucken bestimmter einzelner Farbfelder mit einem Drucker durch die so hervorgerufenen Farbübergänge erzeugt.

Demgegenüber liegt der Erfindung die Aufgabe Zugrunde, die visuelle Lesbarkeit des Farbcodes bei Verwendung mehrerer Farbcode-Felder Zu verbessern.

Diese Aufgabe wird gelöst mit einem Verfahren nach Anspruch 1.

Dabei ist der Begriff "Farbcodieren" im weitesten Sinne zu verstehen, d.h. dieser Begriff umfaßt nicht nur die Codierung mittels unterschiedlicher Farben sondern auch beispielsweise unterschiedliche Tönungen der gleichen Farbe und unterschiedlichen visuellen Eindruck etwa durch Variation der Oberflächenbeschaffenheit des Informationsträgers. Diese Farbcodierung gewährleistet auch aus größerer Entfernung eine schnellere und sichere Lesbarkeit als eine einfarbige Symbolcodierung, etwa mit Hilfe von Zahlen oder Buchstaben.

Die Erfindung wird nachstehend mit Bezug auf die anliegende Zeichnung näher erläutert. Es zeigen:

Figur 1    einen erfindungsgemäßen Informationsträger von der Bearbeitung auf einer EDV-Anlage und

Figur 2    einen Informationsträger gemäß Figur 1 nach Bearbeitung durch eine EDV-Anlage.

Der Informationsträger gemäß der Zeichnung besteht aus einem Substrat 1, beispielsweise aus Papier, Karton, Kunststoff oder Metall oder ist mehrschichtig aus verschiedenen dieser Materialien aufgebaut. Ein wesentlicher Bestandteil dieses Informationsträgers sind die Farbcode-Felder 3 bis 8, die an sich grundsätzlich an beliebiger Stelle des Informationsträgers angeordnet sein können; vorzugsweise sind diese Farbcode-Felder jedoch an einem Rand des Informationsträgers 1 nebeneinander angeordnet, wie dies in der Zeichnung dargestellt ist. Soweit der Informationsträger von den Farbcode-Feldern 3 bis 8 freie Felder oder Flächen 2 aufweist, können letztere beliebig mit Informationen, wie Texten oder Symbolen versehen werden.

Grundgedanke der Erfindung ist es nun, eine unterschiedliche Farbcodierung mehrerer Informationsträger 1, die zunächst ein völlig gleiche Kombination der Farbcode-Felder aufweisen, nachträglich programmgesteuert und gegebenenfalls im gleichen Arbeitsgang wie das Bedrucken der freien Felder 2 durchzuführen.

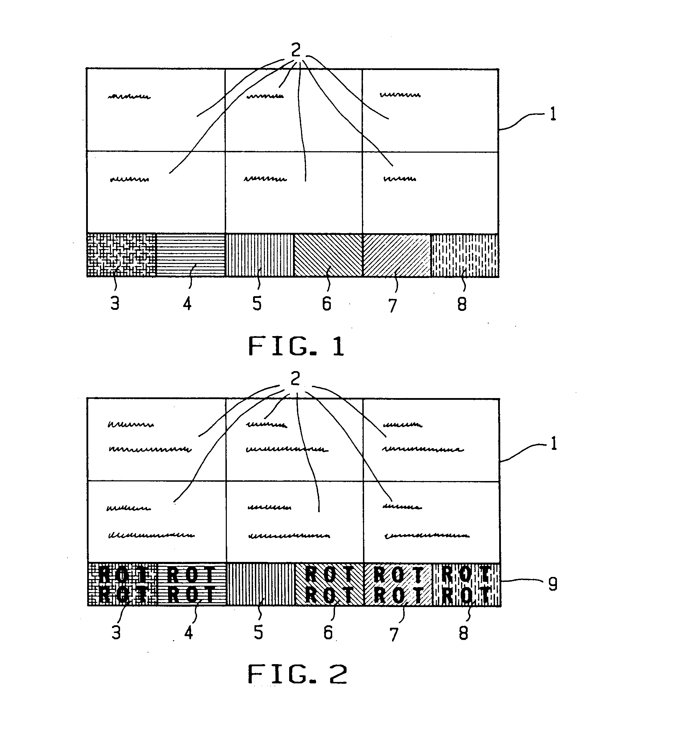

Als Beispiel wird angenommen, daß die Felder 3 bis 8 in dieser Reihenfolge folgende Farben aufweisen: gelb, hellblau, rot, grün, braun, violett. Soll nun dieser Informationsträger ein Farbcode-Feld mit der Farbe rot erhalten, so wird programmgesteuert auf die Felder 3, 4 und 6 bis 8 beispeilsweise mit Hilfe eines Matrixdruckers der Begriff für die gewünschte Codefarbe "ROT" im Fettdruck eingedruckt werden (vgl. Figur 2). Ein weiterhin mögliches flächiges Abdecken der nicht gewünschten Farben durch den Drucker darf nicht so stark ausgeprägt sein, daß der eingedruckte Farbenbegriff "ROT" nicht mehr sichtbar ist.

Die erfindungsgemäßen Informationsträger können vorteilhafterweise in Form von Endlos-Bahnen zum Bedrucken auf EDV-Druckern hergestellt werden, wobei die Farbcodierung selbst auf dem EDV-Druckern durch vollständiges oder teilweises Bedrucken einzelner Farbcode-Felder erfolgt. Zur Erhöhung der Codierungs-Vielfalt können in an sich bekannter Weise mehrere Farbcode-Felder, beispielsweise zwei oder drei Farbcode-Felder verwendet, d.h. auf der EDV-Anlage unbedruckt belassen werden, so daß zwei bzw. drei Farbcode-Felder in Kombination jeweils die gewünschte Codierung bilden.

Abgesehen von dem vorstehend erläuterten Bedrucken sind auch andere Maßnahmen im Rahmen der Erfindung geeignet, die gewünschte Farbcodierung programmgesteuert vorzunehmen, etwa durch vollständiges oder teilweises Ausstanzen oder Perforieren der nicht gewünschten Farbcode-Felder oder diese werden in anderer geeigneter Weise oberflächenbehandelt (z.B. durch Aufrauhen), um den ursprünglichen Farbeindruck der Farbcode-Felder zu verändern.

## Patentansprüche

1. Verfahren zum Farbcodieren von Informationsträgern, bestehend aus einem Substrat (1), auf dem mehrere Farbcode-Felder (3-8) aufgebracht sind, wobei die (3-8) eine jeweils unterschiedliche Farbgebung aufweisen zur Codierung eines Codesymbols mindestens eine Farbe eines aus Teilbereichen aller Farbwelefelder (3-8) bestehenden Farbcodefeldbereiches unkenntlich gemacht wird, dadurch gekennzeichnet, daß nur ein Symbol codiert wird und dadurch jeder Teilbereich jeweils durch ein gesamtes Farbcodefeld gebildet wird, daß die Codierung mittels eine programmgesteuerten Vorrichtung geschieht und daß mindestens auf ein Farbcode-Feld (3,4, 6-8) mittels der programmgesteuerten Vorrichtung die Farbbezeichnung des Farbcode-Feldes, das nicht unkenntlich gemacht wird, aufgebracht wird.

2. Verfahren nach Anspruch 1, dadurch gekennzeichnet, daß mindestens ein Farbcode-Feld (3,4, 6-8) mittels der programmgesteuerten Vorrichtung dauerhaft überdeckt wird.

3. Verfahren nach Anspruch 1 oder 2, dadurch gekennzeichnet, daß die Informationsträger Etiketten sind.

4. Verfahren nach einem der Ansprüche 1 bis 3, dadurch gekennzeichnet, daß die programmgesteuerte Vorrichtung eine Druckvorrichtung ist.

5. Verfahren nach einem der Ansprüche 1 bis 4, dadurch gekennzeichnet, daß die Farbbezeichnung mehrmals untereinander auf dem Farbcode-Feld aufgebracht wird.

## Claims

1. A method for colour-coding data carriers comprising a substrate (1) onto which several colour code segments (3-8) of different colouration are applied, whereby for coding a code symbol at least one colour of a colour code segment area consisting of partial areas of all colour code segments (3-8) is rendered unidentifiable, characterized in that only one symbol is coded and each partial area is thereby formed by an entire colour code segment so that the coding occurs by means of a programme controlled device and that at least the colour designation of the colour code segment, which is not rendered unidentifiable, is applied onto a colour code segment (3,4,6-8) by means of the programme controlled device.

2. Process according to claim 1, characterized in that at least one colour code segment (3,4,6-8) is permanently overprinted by means of the programme controlled device.

3. Process according to claim 1 or 2, characterized in that the data carriers are labels.

4. Process according to any one of claims 1 to 3, characterized in that the programme controlled device is a printing device.

5. Process according to any one of claims 1 to 4, characterized in that the colour designation is applied several times one beneath the other onto the colour code segment.

## Revendications

1. Procédé pour le codage en couleur de supports d'informations constitué par un substrat (1) sur lequel sont appliqués plusieurs segments de code en couleur (3-8) qui présentent chacun une coloration différente, dans lequel pour le codage d'un symbole de code au moins une couleur d'une zone de segment de code en couleur constituant des zones partielles de tous les segments de code en couleur (3-8) est rendue non identifiable, caractérisé en ce qu'un seul symbole est codé et ce faisant, chaque zone partielle est formée par un segment de code couleur complet, en ce que le codage s'effectue au moyen d'un dispositif programmé et, en ce qu'au moins la désignation de couleur du segment de code en couleur qui n'est pas rendue non identifiable, est appliquée sur un segment de code en couleur (3,4, 6-8) au moyen du dispositif programmé.

2. Procédé selon la revendication 1, caractérisé en ce qu'au moins un segment de code en couleur (3,4, 6-8) est revêtu ou surimprimé de façon permanente au moyen du dispositif programmé.

3. Procédé selon la revendication 1 ou 2, caractérisé en ce que les supports d'informations sont des étiquettes.

4. Procédé selon l'une des revendications 1 à 3, caractérisé en ce que le dispositif programmé est un dispositif d'impression ou imprimante.

5. Procédé selon l'une des revendications 1 à 4, caractérisé en ce que la désignation de couleur est appliquée plusieurs fois l'une au-dessous de l'autre sur le segment de code en couleur.

FIG. 1

FIG. 2